# FASCICULE DE BREVET EUROPEEN

(11) **EP 3 221 181 B1**
(45) Date de publication et mention de la délivrance du brevet: **12.09.2018**
(21) Numéro de dépôt: 15808727.0
(22) Date de dépôt: 17.11.2015
(51) Int. Cl.: B60L 7/10, B60W 20/00, B60W 30/18, B60L 11/18

(54) **PROCÉDÉ DE RECHARGE DE MOYENS D'ACCUMULATION D'ÉNERGIE ÉQUIPANT UN VÉHICULE ÉLECTRIQUE OU HYBRIDE**
VERFAHREN ZUM WIEDERAUFLADEN VON ENERGIEAKKUMULATIONSMITTELN, DIE AN EIN ELEKTRO- ODER HYBRIDFAHRZEUG MONTIERT SIND
METHOD FOR RECHARGING ENERGY ACCUMULATION MEANS FITTED TO AN ELECTRIC OR HYBRID VEHICLE

(30) Priorité: 17.11.2014 FR 1461089
(43) Date de publication de la demande: 27.09.2017
(73) Titulaire: Lohr Electromecanique, 67980 Hangenbieten (FR)
(72) Inventeur: DUMAS, Pierre, 67200 Strasbourg (FR); VERDIER, Laurent, 67114 Eschau (FR)
(74) Mandataire: Merckling, Norbert
(86) Numéro de dépôt international: PCT/FR2015/053099
(87) Numéro de publication internationale: WO 2016/079413

(56) Documents cités:
- EP-A2- 2 537 701
- WO-A1-2013/182211
- JP-A- 2009 232 672
- JP-A- 2010 045 961
- US-A1- 2008 094 013
- US-A1- 2010 096 926

## Description

### Domaine technique

La présente invention se rapporte au domaine technique général des véhicules électriques ou hybrides équipés d'une source d'énergie électrique embarquée.

Par source d'énergie électrique embarquée, il faut entendre des batteries de traction ou des super-condensateurs ou une combinaison de telles sources d'énergies. Par définition, on utilisera dans la présente plus généralement le terme « batterie » désignant l'une ou l'autre des sources d'énergies citées ci-dessus.

Les véhicules électriques ou hybrides comprennent donc une telle source d'énergie, une machine de traction électrique, fonctionnant en moteur pour accélérer le véhicule ou fonctionnant en générateur pour freiner le véhicule. Ces véhicules électriques ou hybrides comprennent également des convertisseurs de tractions, constitués d'une électronique de puissance et d'une électronique de commande. Ces convertisseurs pilotent en couple et en vitesse les machines de tractions en fonction de consignes provenant généralement de pédales d'accélération et de freinage ou d'actionneurs ou manipulateur manuel.

La batterie d'un tel véhicule doit être rechargée soit dynamiquement en récupérant l'énergie de freinage du véhicule, soit à l'arrêt en effectuant une recharge totale sachant que la recharge dynamique est généralement insuffisante.

La présente invention concerne plus particulièrement un procédé de recharge de la batterie de véhicules électriques ou hybrides. Par véhicule, il faut comprendre tout type de véhicule, soit individuel, soit des véhicules de transport en commun du genre bus, tramway ou autres.

Il est connu, dans les systèmes de recharges d'utiliser un convertisseur spécifique pour convertir l'énergie disponible en énergie directement utilisable par une batterie embarquée. Un tel convertisseur spécifique peut faire partie d'une station fixe de recharge alimentée en tension alternative du réseau électrique et raccordée par un câble et une prise au véhicule. Une telle armoire délivre donc une tension continue et un courant continu, d'amplitudes variables, qui permet d'assurer une recharge efficace de la batterie. Les amplitudes de cette tension et courant continu sont généralement demandés par une électronique de commande embarquée gérant la source d'énergie embarquée à savoir la batterie, la dite électronique de commande communiquant avec la station de recharge.

Un tel convertisseur spécifique peut également être embarqué à bord du véhicule. Le convertisseur reçoit ainsi l'énergie alternative provenant d'une installation fixe par exemple par intermédiaire d'un câble pour recharger la batterie embarquée. Dans ce cas de figure, le chargeur obtenu est un convertisseur actif, souvent volumineux et associé à une électronique de commande complexe. Ceci est un inconvénient non négligeable.

On connaît également, par l'intermédiaire du document FR 2 938 711, un système de recharge dans lequel on utilise un moteur de traction et son convertisseur pour recharger la batterie. Dans un tel système, une tension triphasée, provenant du réseau électrique fixe, est raccordée au bobinage statorique via trois points d'entrée distincts. Le convertisseur du moteur de traction est alors utilisé comme redresseur. Une telle solution technique présente cependant un certain nombre d'inconvénients.

En effet, la tension continue maximale que l'on peut atteindre est de 540 V pour une tension de réseau alternative de 400 V. Il est de ce fait impossible de recharger une batterie présentant une tension crête à crête supérieure à 540 V. Or, sur des véhicules lourds de type bus ou tramway il est fréquent que les batteries de tractions ou les super-condensateurs présentent une tension de 750 volts crête.

Par ailleurs, le bobinage du moteur de traction est spécifique et complexe, sachant que chaque phase est divisée en deux. Ainsi, le nombre de connexions électriques pour le moteur de traction est 6. Dans une autre réalisation, connue par exemple par l'intermédiaire du document FR 2 961 970, le nombre de connexions électriques pour le moteur de traction est 9, alors que le nombre de connexions électriques pour un moteur de traction dans une réalisation standard est 3.

Il faut noter également que le convertisseur de traction utilisé dans les exemples précités est spécifique et complexe. Ce type de convertisseur spécifique, notamment celui décrit dans le document FR 2 938 711, nécessite la mise en oeuvre d'un pont en H pour chaque phase moteur, soit 3 ponts en H étant donné que le moteur est constitué de 3 phases. Chaque pont en H comporte 4 semi-conducteurs IGBT. Le convertisseur utilise ainsi 12 semi-conducteurs IGBT, ce qui en fait un convertisseur très spécifique. A titre de comparaison, un convertisseur standard ne comporte que 6 semi-conducteurs IGBT.

Le document US 2008/094013 divulgue un procédé de rechargement d'une source d'énergie électrique embarquée d'un véhicule électrique ou hybride selon le préambule de la revendication 1.

### Divulgation de l'invention

L'objet de la présente invention vise par conséquent à remédier aux inconvénients mentionnés ci-dessus et à proposer un procédé de recharge mis en oeuvre avec des moyens simples et/ou équipant déjà le véhicule.

Les objets assignés à l'invention sont également atteints à l'aide d'un procédé de rechargement d'une source d'énergie électrique embarquée d'un véhicule électrique ou hybride, comportant au moins deux moteurs de traction électriques associés respectivement à un premier convertisseur de traction et à un second convertisseur de traction et une électronique de commande, ledit véhicule fonctionnant selon un mode de traction grâce à l'énergie électrique fournie par la source d'énergie électrique, selon un mode de freinage pour recharger ladite source d'énergie électrique lors des phases de freinage ou de décélération et selon un mode de rechargement à l'arrêt, pour recharger ladite source d'énergie électrique lors de phases d'arrêt dudit véhicule, ledit procédé consistant à utiliser l'électronique de commande pilotant les convertisseurs de traction pour effectuer une reconfiguration d'une part des deux convertisseurs et d'autre part des moteurs, pour transformer lesdits convertisseurs et lesdits moteurs en chargeur de la source d'énergie embarquée, caractérisé en ce que lors d'une phase d'arrêt du véhicule, on relie un réseau fixe d'alimentation électrique au premier convertisseur de traction, pour fournir une tension électrique continue de référence U_{R} et pour reconfigurer des moteurs :
- on connecte en série les neutres des deux bobinages statoriques desdits moteurs par l'intermédiaire d'un premier interrupteur commandé à la fermeture par l'électronique de commande, laquelle pilote également d'autres interrupteurs ou moyens de commutation, pour reconfigurer les convertisseurs de traction :
- on mesure la tension électrique U_{B} aux bornes de la source d'énergie électrique embarquée,
- on utilise l'électronique de commande pour comparer la tension électrique U_{B} à la tension électrique de référence U_{R},
- si la tension électrique U_{B} est inférieure à la tension électrique de référence U_{R}, on effectue une reconfiguration consistant à transformer le premier convertisseur alimenté directement avec la tension continue U_{R}, en circuit hacheur-dévolteur pour réguler le courant délivré à la source d'énergie électrique embarquée, le second convertisseur étant dans un état inhibé,
- si la tension électrique U_{B} est supérieure ou égal à la tension électrique de référence U_{R}, on effectue une reconfiguration consistant à transformer le second convertisseur en circuit hacheur-survolteur pour réguler le courant délivré à la source d'énergie électrique embarquée, le premier convertisseur étant dans un état inhibé,
- on commande à la fermeture le premier interrupteur, et
- on commande à l'ouverture un second interrupteur connectant le premier convertisseur de traction à la source d'énergie, le second convertisseur de traction restant connecté à ladite source d'énergie.

Selon un exemple de mise en oeuvre, le procédé de rechargement conforme à l'invention consiste à utiliser une tension électrique de référence U_{R} issue d'un convertisseur redressant une tension de réseau d'alimentation alternative mono ou triphasée.

Le convertisseur est avantageusement embarqué selon un exemple de mise en oeuvre du procédé conforme à l'invention.

Selon un autre exemple de mise en oeuvre, le procédé conforme à l'invention consiste à utiliser une tension électrique de référence U_{R} issue directement d'une source d'alimentation en tension continue.

Selon un exemple d'application conforme à l'invention, le procédé est mis en oeuvre à l'aide d'un essieu électrique comportant deux moteurs électriques. Les moteurs électriques sont par exemple des moteur-roues.

L'essieu électrique équipe par exemple un véhicule individuel ou un véhicule de transport en commun du genre bus ou tramway.

Le procédé de recharge conforme à l'invention présente l'avantage qu'il est mis en oeuvre à l'aide d'éléments constitutifs d'un véhicule hybride, à savoir notamment les moteurs de tractions et les convertisseurs associés. Il n'est pas nécessaire d'intégrer dans le véhicule un convertisseur spécifique et une électronique de commande spécifique et complexe pour procéder à la recharge.

Les convertisseurs utilisés dans le dispositif conforme à l'invention sont des convertisseurs de tractions standard, à savoir constitués chacun de trois bras.

L'unique équipement rajouté dans un système mettant en oeuvre la présente invention, est, selon un exemple de réalisation, un pont redresseur, à savoir un pont de diodes, lequel constitue un équipement passif ne nécessitant aucune électronique de commande.

Un autre avantage de l'invention réside dans le fait que chaque moteur de traction n'est pas raccordé directement au réseau triphasé, chaque moteur de traction reste raccordé à son convertisseur de traction qui lui est associé.

Un autre avantage remarquable est obtenu avec le dispositif conforme à l'invention par le fait que l'on peut recharger les batteries dont la tension est supérieure à la tension redressée du réseau électrique.

Le procédé conforme à l'invention permet en outre d'effectuer une recharge de batterie à partir de toutes les prises électriques existantes, délivrant une tension alternative de 110 V, 230 V ou 400 V, à 50 Hz ou 60 Hz, en monophasé ou en triphasé.

D'autres caractéristiques et avantages de l'invention ressortiront également des dessins donnés à titre d'exemples illustratifs et non limitatifs dans lesquels :
- la figure 1 est un diagramme fonctionnel illustrant le procédé de recharge conforme à l'invention, lorsque le véhicule électrique ou hybride est dans une phase de fonctionnement correspondant à un mode de traction,
- la figure 2 représente un diagramme fonctionnel illustrant le procédé de recharge conforme à l'invention, lorsque le véhicule électrique ou hybride est dans une phase de fonctionnement correspondant au mode freinage, et
- la figure 3 représente un diagramme fonctionnel illustrant le procédé de recharge conforme à l'invention, lorsque le véhicule hybride ou électrique est dans un mode recharge à l'arrêt.

### Description détaillée des figures

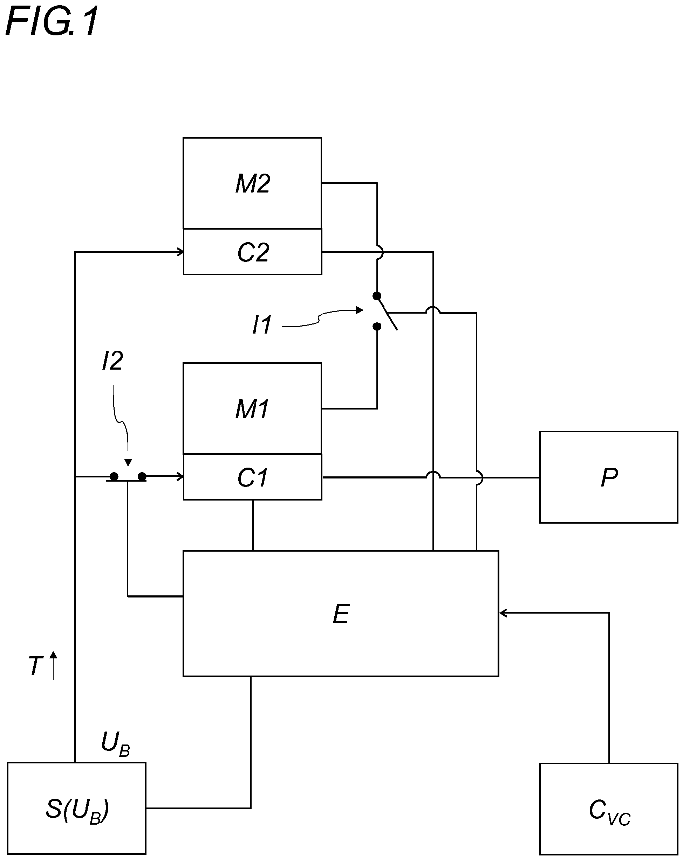

La figure 1 illustre le procédé de rechargement conforme à l'invention lorsque le véhicule est en mode traction, c'est-à-dire qu'une électronique de commande E reçoit une consigne du couple et/ou de vitesse C_{vc}.

La motorisation est constituée d'un premier moteur M1 et d'un second moteur M2 par exemple des moteurs électriques du genre moteur roue, lesquels sont associés chacun à un convertisseur de traction respectif C1 et C2, appelés également onduleurs.

Une consigne de couple ou de vitesse C_{vc} est alors transmise par tout moyen connu à l'électronique de commande E. Cette dernière est interconnectée avec les convertisseurs de traction C1 et C2 ainsi qu'avec la source d'énergie électrique S embarquée.

Un convertisseur redressant la tension électrique ou pont redresseur P, par exemple embarqué, est relié au premier convertisseur de traction C1. Un tel convertisseur ou pont redresseur P permet de redresser une tension d'un réseau d'alimentation électrique alternative monophasée ou triphasée. Le pont redresseur P intervient uniquement lors des phases de rechargement à l'arrêt du véhicule.

Selon un autre exemple de mise en oeuvre, il est possible d'utiliser une tension électrique de référence U_{R} issue directement d'une source d'alimentation en tension continue, évitant ainsi d'utiliser un pont redresseur embarqué.

L'électronique de commande E permet de maintenir dans un état déconnecté les bobinages statoriques des moteurs de tractions M1 et M2. Une telle déconnexion est obtenue par des moyens de commutation schématisés par un premier interrupteur I1 piloté par l'électronique de commande E. Le premier interrupteur I1 est maintenu en position d'ouverture dans ce mode de traction.

En mode de rechargement à l'arrêt, chaque convertisseur C1,C2 est avantageusement constitué de trois bras utilisés en entrelacement afin de diminuer le courant de phase, diminuant ainsi l'ondulation de courant.

Les bobinages des moteurs électriques M1,M2 sont réalisés de telle sorte que les neutres peuvent être accessibles en vue de leur connexion.

Dans le mode fonctionnement de traction, les moteurs de tractions M1 et M2 sont alimentés en énergie électrique par la source S. Ces alimentations, schématisées par la flèche T sont effectuées par l'intermédiaire des convertisseurs de tractions C1 et C2. Un moyen de commutation, schématisé par le second interrupteur I2, commandé en position de fermeture par l'intermédiaire de l'électronique de commande E permet de raccorder le premier convertisseur C1 à la source d'énergie embarquée S. Le flux de puissance transmis dans ce mode de fonctionnement est donc schématisé par la flèche T.

Une telle alimentation est connue en tant que telle et ne sera pas décrite plus en détails.

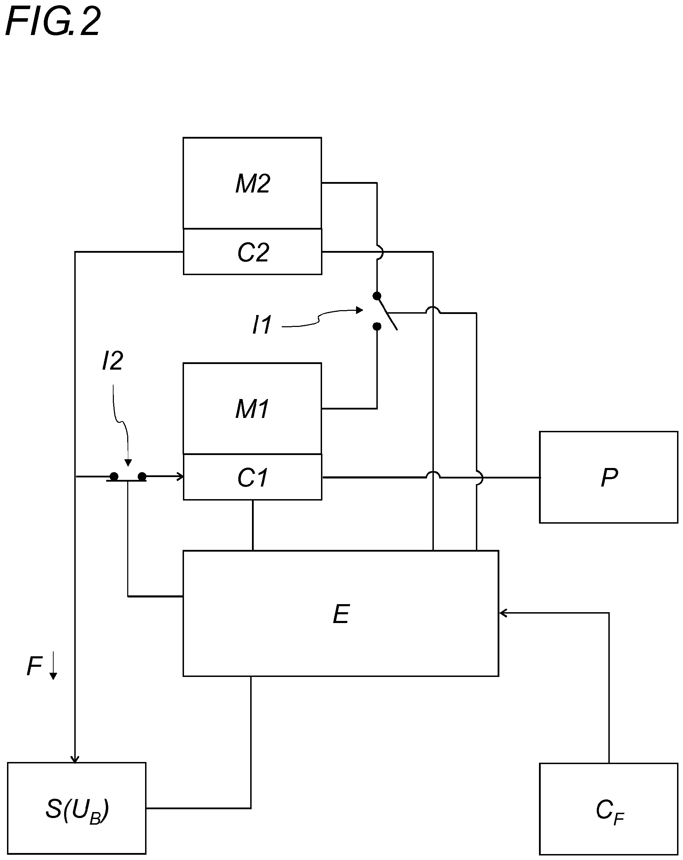

La figure 2 illustre le procédé conforme à l'invention dans une phase de recharge et plus précisément lorsque le véhicule électrique ou hybride est dans une phase de fonctionnement correspondant à un freinage ou à une décélération.

Dans un tel mode de fonctionnement les moteurs de tractions M1 et M2 sont transformés en générateurs de courant alimentant via les convertisseurs C1 et C2 la source d'énergie S.

Ce mode de fonctionnement, appelé mode freinage, connu en tant que tel et piloté par l'électronique de commande E, est bien entendu initié par une consigne de freinage ou décélération C_{f}. La recharge de source d'énergie S est schématisée à l'aide de la flèche F à la figure 2. Les interrupteurs I1 et I2 restant respectivement en position ouverte et fermée dans ce mode freinage.

Dans le mode traction comme dans le mode freinage, les convertisseurs C1 et C2 sont connectés en parallèle sur la source d'énergie embarquée S.

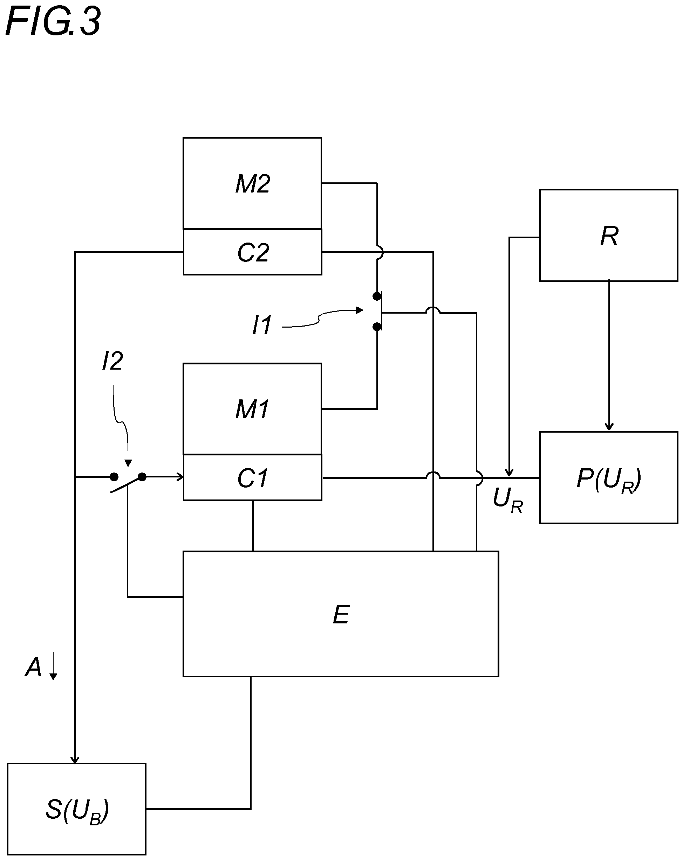

La figure 3 illustre une phase de fonctionnement correspondant à un rechargement à l'arrêt du véhicule. Ce mode de rechargement à l'arrêt correspond au branchement du pont redresseur P sur une alimentation électrique du réseau électrique, fournissant une tension alternative U_{R}. L'électronique de commande E permet alors de reconfigurer les moteurs de tractions M1 et M2 en reliant en série leurs bobinages statoriques et plus précisément les neutres desdits moteurs M1,M2. Cette connexion est obtenue par des moyens de commutation schématisés par le premier interrupteur I1, lequel est commandé en position fermée. Simultanément, le second interrupteur I2 est commandé en ouverture par l'électronique de commande E.

Dans ce mode de rechargement à l'arrêt, l'électronique de commande E permet de réaliser une reconfiguration des convertisseurs de tractions C1 et C2. Les composants électroniques utilisés dans l'électronique de commande E pour réaliser une telle reconfiguration sont connus en tant que tel.

La reconfiguration consiste donc dans un premier temps à mesurer la tension électrique U_{B} aux bornes de la source d'énergie électrique embarquée et à utiliser l'électronique de commande E pour comparer ladite tension électrique U_{B} à la tension électrique redressée U_{R} du réseau d'alimentation fixe.

Le procédé conforme à l'invention consiste alors à adapter la reconfiguration statique des convertisseurs C1 et C2, en fonction du résultat de la comparaison entre la tension électrique U_{B} et la tension électrique U_{R}.

Si la tension électrique U_{B} est inférieure à la tension électrique U_{R}, la reconfiguration consiste à transformer le premier convertisseur C1 en circuit hacheur dévolteur pour réguler le courant délivré à la source d'énergie électrique S embarquée. Cette dernière alors est rechargée via le second convertisseur C2 reconfiguré, tel que cela est schématisé par la flèche A à la figure 3. Le second convertisseur C2 est alors inhibé en forçant les semi-conducteurs IGBT dudit second convertisseur C2 en ouverture.

En revanche, si la tension électrique U_{B} est supérieure ou égale à la tension électrique U_{R}, la reconfiguration consiste à transformer le second convertisseur C2 en circuit hacheur survolteur pour réguler le courant délivré à la source d'énergie électrique S embarquée. Cette dernière est alors rechargée via le second convertisseur C2 reconfiguré, tel que cela est schématisé par la flèche A à la figure 3. Le premier convertisseur C1 est alors inhibé. Les semi-conducteurs IGBT du premier convertisseur C1 sont pilotés en ouverture le rendant ainsi transparent.

Dans l'une ou l'autre des reconfigurations des convertisseurs C1 et C2, les bobinages statoriques des moteurs M1 et M2 restent reliés en série par leur neutre. Les interrupteurs I1 et I2 restent donc commandés respectivement en fermeture et en ouverture lors du mode rechargement à l'arrêt. Lors de ces deux reconfigurations, la source d'énergie embarquée S, les convertisseurs C1 et C2 et le pont redresseur P restent reliés en cascade.

Le procédé de rechargement conforme à l'invention trouve son application notamment dans un véhicule du genre bus ou tramway ou véhicule individuel, comportant au moins un essieu électrique. Ce dernier comporte par exemple deux moteurs-roues indépendants. Les roues correspondantes peuvent être liées mécaniquement ou non.

Selon un autre exemple conforme à l'invention, le procédé est mis en oeuvre avec deux moteurs électrique indépendants disposés hors des roues.

A titre d'exemple, la tension électrique fournie par le réseau fixe U_{R} est de 230 V monophasé à 50 Hz ou de 400 V triphasé à 50 Hz. Ainsi, la tension électrique alternative de 400 V redressée correspond à la tension électrique continue U_{R} de 540 V.

Lors de la transition d'une reconfiguration à l'autre, notamment lors du passage du circuit hacheur dévolteur au circuit hacheur-survolteur, c'est-à-dire lors de la désactivation du circuit hacheur dévolteur et de l'activation du circuit hacheur survolteur, un fonctionnement hybride peut être initié. Lors de cette transition, les circuits hacheurs dévolteur et survolteur fonctionnent simultanément, permettant ainsi d'obtenir une transition douce. Le circuit hacheur-dévolteur s'estompera progressivement au profit du circuit hacheur survolteur.

Il est évident que la présente description ne se limite pas aux exemples explicitement décrits, mais comprend également d'autres modes de réalisation et/ou de mise en oeuvre. Ainsi, une caractéristique technique décrite peut être remplacée par une caractéristique technique équivalente, sans sortir du cadre de la présente invention. De la même manière, une étape décrite peut être remplacée par une étape équivalente sans sortir du cadre de la présente invention.

## Revendications

1. Procédé de rechargement d'une source d'énergie électrique (S) embarquée d'un véhicule électrique ou hybride, comportant au moins deux moteurs de traction électriques (M1,M2) associés respectivement à un premier convertisseur de traction (C1) et à un second convertisseur de traction (C2) et une électronique de commande (E), ledit véhicule fonctionnant selon un mode de traction (T) grâce à l'énergie électrique fournie par la source d'énergie électrique (S), selon un mode de freinage pour recharger ladite source d'énergie électrique (S) lors des phases de freinage ou de décélération et selon un mode de rechargement à l'arrêt, pour recharger ladite source d'énergie électrique (S) lors de phases d'arrêt dudit véhicule, ledit procédé consistant à utiliser l'électronique de commande (E) pilotant les convertisseurs de traction (C1,C2) pour effectuer une reconfiguration d'une part des deux convertisseurs (C1) et (C2) et d'autre part des moteurs (M1) et (M2), pour transformer lesdits convertisseurs (C1,C2) et lesdits moteurs (M1,M2) en chargeur de la source d'énergie (S) embarquée, **caractérisé en ce que** lors d'une phase d'arrêt du véhicule, on relie un réseau fixe (R) d'alimentation électrique au premier convertisseur de traction (C1), pour fournir une tension électrique continue de référence U_{R} et pour reconfigurer des moteurs (M1,M2) :
- on connecte en série les neutres des deux bobinages statoriques desdits moteurs (M1,M2) par l'intermédiaire d'un premier interrupteur (I1) commandé à la fermeture par l'électronique de commande (E), laquelle pilote également d'autres interrupteurs ou moyens de commutation, pour reconfigurer les convertisseurs de traction (C1,C2) :
- on mesure la tension électrique U_{B} aux bornes de la source d'énergie électrique (S) embarquée,
- on utilise l'électronique de commande (E) pour comparer la tension électrique U_{B} à la tension électrique de référence U_{R},
- si la tension électrique U_{B} est inférieure à la tension électrique de référence U_{R}, on effectue une reconfiguration consistant à transformer le premier convertisseur (C1) alimenté directement avec la tension de référence U_{R}, en circuit hacheur-dévolteur pour réguler le courant délivré à la source d'énergie électrique (S) embarquée, le second convertisseur (C2) étant dans un état inhibé,
- si la tension électrique U_{B} est supérieure ou égal à la tension électrique de référence U_{R}, on effectue une reconfiguration consistant à transformer le second convertisseur (C2) en circuit hacheur-survolteur pour réguler le courant délivré à la source d'énergie électrique (S) embarquée, le premier convertisseur (C1) étant dans un état inhibé,
- on commande à la fermeture le premier interrupteur (I1), et
- on commande à l'ouverture un second interrupteur (I2) connectant le premier convertisseur de traction (C1) à la source d'énergie (S), le second convertisseur de traction (C2) restant connecté à ladite source d'énergie (S).

2. Procédé de rechargement selon la revendication 1, **caractérisé en ce qu'**il consiste à utiliser une tension électrique de référence U_{R} issue d'un convertisseur (P) redressant une tension de réseau d'alimentation alternative mono ou triphasée.

3. Procédé de rechargement selon la revendication 2, **caractérisé en ce que** le convertisseur (P) est embarqué.

4. Procédé de rechargement selon la revendication 1, **caractérisé en ce qu'**il consiste à utiliser une tension électrique de référence U_{R} issue directement d'une source d'alimentation en tension continue.

5. Utilisation d'un essieu électrique comportant deux moteurs électriques (M1,M2) pour mettre en oeuvre le procédé conforme à l'une quelconque des revendications 1 à 4.

6. Utilisation selon la revendication 5, **caractérisée en ce que** les moteurs électriques (M1,M2) sont des moteur-roues.

7. Utilisation selon la revendication 5 ou 6, **caractérisée en ce que** l'essieu électrique équipe un véhicule individuel.

8. Utilisation selon la revendication 5 ou 6, **caractérisée en ce que** l'essieu électrique équipe un véhicule de transport en commun du genre bus ou tramway.

## Patentansprüche

1. Verfahren zum Aufladen einer elektrischen Energiequelle (S) an Bord eines Elektro- oder Hybridfahrzeugs, umfassend mindestens zwei elektrische Antriebsmotoren (M1, M2), jeweils verbunden mit einem ersten und zweiten Antriebsstromrichter (C1, C2) und einer Steuerelektronik (E), wobei das Fahrzeug gemäß einem Antriebsmodus (T) arbeitet, bei dem von der elektrischen Energiequelle (S) gelieferte elektrische Energie verwendet wird, gemäß einem Bremsmodus zum Wiederaufladen der elektrischen Energiequelle (S) während Brems- oder Verzögerungsphasen, und gemäß einem Wiederauflademodus bei Abschaltung, zum Wiederaufladen dieser elektrischen Energiequelle (S) während der Abschaltphasen des Fahrzeugs, dieses Verfahren besteht darin, die Steuerelektronik (E) zu verwenden, die die Antriebsstromrichter (C1, C2) steuert, um einerseits eine Rekonfiguration der beiden Stromrichter (C1, C2) auszuführen und andererseits der Motoren (M1) und (M2), um diese Stromrichter (C1, C2) und diese Motoren (M1, M2) in ein Ladegerät für die an Bord befindliche Energiequelle (S) umzuwandeln, **dadurch gekennzeichnet, dass** bei einer Abschaltphase des Fahrzeugs ein festes Stromversorgungsnetz (R) an den ersten Stromrichter (C1) angeschlossen wird, um eine kontinuierliche Referenzstromspannung U_{R} zu liefern und die Motoren (M1, M2) zu rekonfigurieren:
- Anschluss der Nullleiter der beiden Statorwicklungen dieser Motoren (M1, M2) in Serie über einen ersten Schalter (I1), der beim Schließen über die Steuerelektronik (E) gesteuert wird, die auch weitere Schalter mit Schaltvorrichtungen steuert, um die Antriebsstromrichter (C1, C2) zu rekonfigurieren;
- Messung der elektrischen Spannung U_{B} an den Klemmen der an Bord befindlichen elektrischen Energiequelle (S)
- Nutzung der Steuerungselektronik (E) zum Vergleich der elektrischen Spannung U_{B} mit der elektrischen Referenzspannung U_{R},
- wenn die elektrische Spannung U_{B} niedriger ist als die elektrische Referenzspannung U_{R} wird eine Rekonfiguration durchgeführt, die darin besteht, den direkt mit der elektrischen Referenzspannung U_{R} gespeisten ersten Antriebsstromrichter (C1) in ein bidirektionales Schaltnetzteil umzuwandeln, um den Strom zu regeln, der an die an Bord befindliche elektrischen Energiequelle (S) abgegeben wird, der zweite Antriebsstromrichter (C2) befindet sich in einem gedämpften Zustand.
- wenn die elektrische Spannung U_{B} größer oder gleich der elektrischen Referenzspannung U_{R} wird eine Rekonfiguration durchgeführt, die darin besteht, den zweiten Antriebsstromrichter (C2) in ein bidirektionales Schaltnetzteil umzuwandeln, um den Strom zu regeln, der an die an Bord befindliche elektrische Energiequelle (S) abgegeben wird, der erste Antriebsstromrichter (C1) befindet sich in einem gedämpften Zustand,
- das Schließen des ersten Schalters (I1) wird gesteuert, und
- das Öffnen eines zweiten Schalters (I2), der den ersten Antriebsstromrichter (C1) mit der elektrischen Energiequelle (S) verbindet, wird gesteuert, der zweite Antriebsstromrichter (C2) bleibt mit dieser elektrischen Energiequelle (S) verbunden.

2. Aufladeverfahren gemäß Anspruch 1, **dadurch gekennzeichnet, dass** es darin besteht, eine elektrische Referenzspannung U_{R} zu nutzen, die von einem Stromrichter (P) stammt, der die Spannung eines ein- oder dreiphasigen Wechselstroms gleichrichtet.

3. Aufladeverfahren gemäß Anspruch 2, **dadurch gekennzeichnet, dass** der Stromrichter (P) sich an Bord befindet.

4. Aufladeverfahren gemäß Anspruch 1, **dadurch gekennzeichnet, dass** es darin besteht eine elektrische Referenzspannung U_{R} zu nutzen, die direkt von einer Gleichspannungsenergiequelle stammt.

5. Nutzung einer elektrischen Achse mit zwei Elektromotoren (M1, M2) zum Umsetzen des Verfahrens gemäß irgendeinem der Ansprüche 1 bis 4.

6. Nutzung gemäß Anspruch 5, **dadurch gekennzeichnet, dass** die Elektromotoren (M1, M2) Radnabenmotoren sind.

7. Nutzung gemäß Anspruch 5 oder 6, **dadurch gekennzeichnet, dass** die elektrische Achse ein Personenfahrzeug ausrüstet.

8. Nutzung gemäß Anspruch 5 oder 6, **dadurch gekennzeichnet, dass** die elektrische Achse ein öffentliches Verkehrsmittel vom Typ Bus oder Straßenbahn ausrüstet.

## Claims

1. Method for recharging an electrical energy source (S) on-board an electric or hybrid vehicle, comprising at least two electric traction motors (M1, M2) respectively associated with a first traction converter (C1) and a second traction converter (C2) and a control electronics (E), said vehicle functioning according to a traction mode (T) using electrical energy provided by the electrical energy source (S), according to a braking mode for recharging said electrical energy source (S) during braking or deceleration phases, and according to a stopping recharge mode for recharging said electrical energy source (S) during the stopping phases of said vehicle, said method consisting in utilizing the control electronics (E) managing the traction converters (C1, C2) to perform a reconfiguration both of the two converters (C1, C2) and also of the motors (M1, M2), in order to transform said converters (C1, C2) and said motors (M1, M2) into a charger for the on-board energy source (S), **characterized in that** during a vehicle stopping phase, a fixed electrical supply grid (R) is connected to the first traction converter (C1) to provide a reference DC electrical voltage U_{R} and to reconfigure the motors (M1, M2):
- the neutrals of the two stator windings of said motors (M1, M2) are connected in series by means of a first switch (I1) ordered in closing position by the control electronics (E), which also manage other switches or commutation devices, in order to reconfigure the traction converters (C1, C2);
- the voltage U_{B} is measured at the terminals of the on-board electric energy source (S);
- the control electronics (E) is used to compare the electrical voltage U_{B} to the reference electrical voltage U_{R};
- if the electrical voltage U_{B} is lower than the reference electrical voltage U_{R}, a reconfiguration is performed consisting in transforming the first converter (C1), supplied directly with the reference voltage U_{R}, into a buck-chopper circuit for regulating the current supplied to the on-board electric energy source (S), the second converter (C2) being in an inhibited state;
- if the electrical voltage U_{B} is greater than or equal to the reference electrical voltage U_{R}, a reconfiguration is performed consisting in transforming the second converter (C2), into a boost-chopper circuit for regulating the current supplied to the on-board electric energy source (S), the first converter (C1) being in an inhibited state;
- the closure of the first switch (I1) is ordered; and
- the opening of a second switch (12) is ordered connecting the first traction converter (C1) to the energy source (S), the second traction converter (C2) remaining connected to said energy source (S).

2. Method for recharging according to claim 1, **characterized in that** it consists in using a reference electrical voltage U_{R} coming from a converter (P) rectifying a single or three-phase AC supply grid voltage.

3. Method for recharging according to claim 2, **characterized in that** the converter (P) is on-board.

4. Method for recharging according to claim 1, **characterized in that** it consists in using a reference electrical voltage U_{R} coming directly from a DC voltage supply source.

5. Use of an electrical axle comprising two electric motors (M1, M2) in order to implement the method according to any one of claims 1 to 4.

6. Use according to claim 5, **characterized in that** the electric motors (M1, M2) are in-wheel motors.

7. Use according to claim 5 or 6, **characterized in that** the electrical axle equips an individual vehicle.

8. Use according to claim 5 or 6, **characterized in that** the electrical axle equips a public transport vehicle like a bus or tram.
